# EUROPÄISCHE PATENTANMELDUNG

(11) **EP 3 217 770 A1**
(43) Veröffentlichungstag der Anmeldung: **13.09.2017**
(21) Anmeldenummer: 17160570.2
(22) Anmeldetag: 13.03.2017
(51) Int. Cl.: H05B 37/02, H02J 9/06, H05B 37/03

(54) **VERFAHREN ZUM ÜBERWACHEN VON NOTLEUCHTEN EINER NOTBELEUCHTUNG UND GERÄT FÜR EINE NOTLEUCHTE EINER NOTBELEUCHTUNG**

(30) Priorität: 11.03.2016 DE 102016104480
(71) Anmelder: INOTEC Sicherheitstechnik GmbH, 59469 Ense (DE)
(72) Erfinder: Ziemkus, Andreas, 59755 Arnsberg (DE)
(74) Vertreter: Graefe, Jörg

(57) **Zusammenfassung**

Die vorliegende Erfindung betrifft ein Verfahren zum Überwachen von Notleuchten einer Notbeleuchtungsanlage, wobei die Notbeleuchtung
- eine Einrichtung zur Steuerung und Energieversorgung von Leuchten und/oder Leuchtmitteln der Notbeleuchtung,
- wenigstens einen an die Einrichtung angeschlossenen Endstromkreis,
- wenigstens ein an den Endstromkreis angeschlossenes Gerät (10, 20) und
- wenigstens eine Notleuchte mit wenigstens einem Leuchtmittel aufweist, wobei die Notleuchte oder das Leuchtmittel der Notleuchte unmittelbar oder mittelbar an das Gerät (10, 20) angeschlossen ist, wobei
- zur Überwachung der Notleuchte oder des Leuchtmittels der Notleuchte mittels des Gerätes (10, 20) eine zeitkontinuierliche oder zeitdiskrete Überwachung der Funktion der Notleuchte oder des Leuchtmittels der Notleuchte durchgeführt wird und
dass durch das Gerät (10, 20) eine Nachricht an die Einrichtung übermittelt wird, wenn das Gerät einen Ausfall oder einen Teilausfall der Notleuchte oder des Leuchtmittels der Notleuchte erfasst.

## Beschreibung

Die vorliegende Erfindung betrifft ein Verfahren zum Überwachen von Notleuchten einer Notbeleuchtung, wobei die Notbeleuchtung
- eine Einrichtung zur Steuerung und Energieversorgung von Leuchten und/oder Leuchtmitteln der Notbeleuchtung,
- wenigstens einen an die Einrichtung angeschlossenen Endstromkreis,
- wenigstens ein an den Endstromkreis angeschlossenes Gerät und
- wenigstens eine Notleuchte mit wenigstens einem Leuchtmittel aufweist, wobei die Notleuchte oder das Leuchtmittel der Notleuchte an das Gerät angeschlossen ist.

Bei Notbeleuchtungen wie sie derzeit bekannt sind, ist - wenn sie vorschriftsmäßig eingerichtet sind - vorgesehen, dass sie in einen Testbetrieb versetzt werden können, in dem Funktionstests der verschiedenen Komponenten der Notbeleuchtung, insbesondere der Notleuchten durchgeführt werden. Der Funktionstest der Notleuchten kann in einem einfachen Fall so gestaltet sein, dass im Testbetrieb alle Notleuchten der Notbeleuchtung eingeschaltet werden und die Notleuchten durch in Augenscheinnahme auf ihre Funktionsfähigkeit überprüft werden, insbesondere auf die Funktion der Leuchtmittel überprüft werden. Es ist vorgeschrieben, dass der Testbetrieb im Batteriebetrieb durchgeführt wird. Das bedeutet, dass in den Endstromkreisen Batteriespannung anliegt.

Eine bekannte Verbesserung ist es, wenn den Notleuchten zugeordneten Geräte mit der Einrichtung über einen Kommunikationskanal verbunden sind und die Einrichtung im Testbestrieb den Notleuchten zugeordneten Geräte anweist, einen Funktionstest durchzuführen, deren Ergebnis dann von den Geräten an die Einrichtung gemeldet wird.

Auch wenn ein Test von Notbeleuchtungen in bestimmten Intervallen, wenigstens einmal pro Woche, vorgeschrieben ist, werden diese Tests durch die Bediener der Notbeleuchtungen zumindest hin und wieder nicht innerhalb des vorgegebenen Rhythmus durchgeführt. Das bedeutet insbesondere, dass die Bediener die Notbeleuchtung nicht in den vorgesehen Testbetrieb versetzen. Notleuchten werden dann nicht überprüft. Ein Ausfall einer Notleuchte, insbesondere einer Notleuchte die in Bereitschaftsschaltung betrieben wird und nicht wie eine Notleuchte in Dauerschaltung ständig leuchtet, fällt dann kaum auf. Ein Ausfall oder Teilausfall einer Notleuchte kann daher lange Zeit unbemerkt bleiben.

Ein Dokument, in dem ein Verfahren zum Überwachen von Notleuchten einer Notbeleuchtung offenbart ist, ist die Gebrauchsmusterschrift mit der Nummer DE 299 06 702 U1, in dem wöchentliche Funktionstest und jährliche Betriebsdauertests beschrieben werden. Diese Tests werden von so genannten Überwachungsstationen an Rettungszeichenleuchten oder Sicherheitsleuten durchgeführt. Die Überwachungsstationen können Meldungen oder Daten von den Rettungszeichenleuchten oder Sicherheitsleuten empfangen und auswerten. Den Überwachungsstationen sind mehrere Rettungszeichenleuchten oder Sicherheitsleuten zugeordnet. Die Überwachungsstationen weisen Meldeeinrichtungen auf, über die Fehler der Rettungszeichenleuchten oder Sicherheitsleuten anzeigt werden können.

Bevor nach dem in dem Dokument DE 299 06 702 U1 offenbarten Verfahren ein Defekt einer Rettungszeichenleuchte oder Sicherheitsleute bemerkt wird, kann - eine fristgerechte Durchführung des Funktionstests vorausgesetzt - ein Zeitraum von einer Woche vergehen. Wird der Funktionstest nicht fristgerecht durchgeführt, kann ein längerer Zeitraum vergehen, bis der Defekt der Sicherheitsleuchte bemerkt wird.

Zwar gibt es Notbeleuchtungen, bei denen der Testbetrieb automatisch durchgeführt wird. Aber auch bei diesen Notbeleuchtungen bleibt das Risiko, dass der Ausfall oder Teilausfall einer Notleuchte nicht sofort bemerkt wird, sondern erst nach der Durchführung des Testes.

### Hier setzt die Erfindung an.

Der Erfindung liegt das Problem zugrunde eine Notbeleuchtung so zu verbessern, dass ein Ausfall oder Teilausfall einer Notleuchte außerhalb eines Testbetriebs bemerkt oder besser bemerkt werden kann.

Dieses Problem wird durch das Verfahren nach Anspruch 1 gelöst. Die Geräte nach Anspruch 9 und nach Anspruch 11 tragen zur Lösung des Problems bei.

Nach der Erfindung wird das eingangs genannte Verfahren zum Überwachen von Notleuchten einer Notbeleuchtung so verbessert,
- dass zur Überwachung der Notleuchte oder des Leuchtmittels der Notleuchte mittels des Gerätes eine zeitkontinuierliche oder zeitdiskrete Überwachung der Funktion der Notleuchte oder des Leuchtmittels der Notleuchte durchgeführt wird und
- dass durch das Gerät eine Nachricht an die Einrichtung übermittelt wird, wenn das Gerät einen Ausfall oder einen Teilausfall der Notleuchte oder des Leuchtmittels der Notleuchte erfasst.

Ein Unterschied zwischen der Erfindung und den bekannten Verfahren zum Überwachen von Notleuchten einer Notbeleuchtung liegt darin, dass eine Funktionsüberwachung der Notleuchten nicht durch die Einrichtung zur Steuerung und Energieversorgung von Leuchten und/oder Leuchtmitteln der Notbeleuchtung in einem Testbetrieb angestoßen wird, sondern das die Notleuchten auch im laufenden Betrieb, sei es im Betrieb ohne Störung der allgemeinen Stromversorgung, sei es im Betrieb mit einer Störung der allgemeinen Stromversorgung überwacht werden. Auch außerhalb des Testbetriebs findet somit eine Überwachung statt. Die Geräte, an die Notleuchten und/oder Leuchtmittel der Notleuchten angeschlossen sind, sind geeignet und eingerichtet die Überwachung auch außerhalb eines Testbetriebs der Notbeleuchtung durchzuführen, insbesondere in einem störungsfreien Betrieb oder auch bei einer gestörten allgemeinen Stromversorgung. Einzige Voraussetzung ist, dass die an das Gerät angeschlossene Notleuchte und/oder die Leuchtmittel der Notleuchten eingeschaltet sind. Nur dann kann die einwandfreie Funktion der Leuchtmittel der Notleuchten sinnvoll überprüft werden.

Die Überwachung findet also durch das oder die Geräte der Notbeleuchtung statt, die an den oder die Endstromkreise angeschlossen sind. Die Überwachung der Notleuchten erfolgt zeitkontinuierlich oder zeitdiskret. Das bedeutet, dass die Überwachung ständig (zeitkontinuierlich) oder ständig wiederholt in zeitlichen Abständen, vorzugsweise in zeitlich äquidistanten Abständen, (zeitdiskret) durchgeführt wird, was noch an Beispielen nähe erläutert wird. Die Überwachung ist in dem Gerät implementiert. Zur Durchführung der Überwachung ist die Einrichtung zur Steuerung und Energieversorgung von Leuchten und/oder Leuchtmitteln der Notbeleuchtung im Grunde nicht notwendig. Die Einrichtung wird vorzugsweise benötigt, da sie Benutzerschnittstellen bereitstellt, über welche ein Benutzer über den Ausfall oder Teilausfall einer oder mehrerer Notleuchten informiert werden kann. Das kann zum Beispiel über eine E-Mail oder eine SMS oder eine Nachricht eines Instant-Messaging-System erfolgen. Damit ist es möglich, dass der Benutzer während eines laufenden Betriebs außerhalb eines Testbetriebs über den Zustand der Leuchte informiert wird. Ein Benutzer hat dadurch die Möglichkeit schneller auf einen Ausfall oder Teilausfall einer Notleuchte zu reagieren.

Eine durch das Gerät an die Einrichtung übermittelte Nachricht, die einen Ausfall oder einen Teilausfall der Notleuchte oder des Leuchtmittels der Notleuchte anzeigt, kann vom Gerät über den Endstromkreis an die Einrichtung übermittelt werden. Das hat den Vorteil, das neben dem Endstromkreis, der zunächst einmal der Energieversorgung der Notleuchten dient, keine weiteren Leitungen gezogen werden müssen und auch keine Mittel für eine drahtlose Kommunikation eingerichtet werden müssen, um die zwischen dem Gerät und der Einrichtung ausgetauschten Nachrichten zu übermitteln.

Vorzugsweise können die Nachrichten durch Modulation der im Endstromkreis anliegenden Spannung nach dem orthogonalen Frequenzmultiplexverfahren oder einem anderen Modulationsverfahren übertragen werden.

In einem Fall, in dem der Eingang des wenigstens einen Leuchtmittels einer an das Gerät angeschlossenen Notleuchte zur Energieversorgung unmittelbar an einen Ausgang des Gerätes angeschlossen ist, kann das Gerät zum Zwecke des Funktionstests die Spannung und/oder den Strom an diesem Ausgang zeitkontinuierlich oder zeitdiskret überwachen. Dazu kann das Gerät zumindest ein erstes Überwachungsmittel zur Überwachung der Spannung am Ausgang des Gerätes und/oder zumindest ein zweites Überwachungsmittel zur Überwachung eines Stromes durch den Ausgang des Gerätes aufweisen. Diese Überwachungsmittel vergleichen die gemessene Spannung und den gemessenen Strom mit unteren und/oder oberen Schwellwerten ständig oder in kurzen zeitlichen Abständen von wenigen Millisekunden oder Sekunden. Die Überwachungsmittel können einen Ausfall oder einen Teilausfall des eingeschalteten Leuchtmittels erkennen, wenn
- die am Ausgang des Gerätes anliegende Spannung einen ersten unteren Schwellwert unterschreitet oder einen ersten oberen Schwellwert überschreitet und/oder
- der durch den Ausgang des Gerätes fließende Strom einen zweiten unteren Schwellwert unterschreitet oder einen zweiten oberen Schwellwert überschreitet.

Bei diesem Verfahren kann ein Gerät für eine Notleuchte einer Notbeleuchtung verwendet werden,
- das einen Eingang zur Verbindung mit einem Endstromkreis einer Notbeleuchtung und einem Ausgang zur Verbindung mit einer Notleuchte oder einem Leuchtmittel der Notleuchte aufweist,
- wobei mit dem Gerät Nachrichten zwischen einer Einrichtung zur Steuerung und Energieversorgung von Leuchten und/oder Leuchtmitteln der Notbeleuchtung und dem Gerät austauschbar sind und
- mit dem Gerät die an den Ausgang des Geräts angeschlossene Notleuchte oder das an das Gerät angeschlossene Leuchtmittel der Notleuchte mit elektrischer Energie aus dem Endstromkreis versorgbar ist,
- wobei das Gerät wenigstens eine Schaltung mit wenigstens einem steuerbaren Schalter aufweist, die mittelbar oder unmittelbar mit dem Eingang und dem Ausgang des Gerätes verbunden ist und mittels der eine am Ausgang des Gerätes anlegbare Spannung oder ein durch den Ausgang des Gerätes fließender Strom zur Versorgung der an das Gerät angeschlossenen Notleuchte oder des an das Gerät angeschlossenen Leuchtmittels der Notleuchte mit elektrischer Energie einschaltbar und/oder einstellbar ist,
- wobei das Gerät einen Schaltkreis zur Steuerung der Schaltung mit dem wenigstens einen steuerbaren Schalter aufweist, der einen Ausgang hat, der mit einem Eingang der wenigstens einen Schaltung zum Einschalten und/oder Einstellen verbunden ist,
- wobei der Schaltkreis einen Stromsensor zum Erfassen des Stroms durch den Ausgang des Gerätes aufweist, und/oder der Schaltkreis einen Spannungssensor zum Erfassen der Spannung am Ausgang des Gerätes aufweist,
- wobei der Schaltkreis ein erstes Überwachungsmittel aufweist, mit welchem die am Ausgang des Gerätes erfasste Spannung auf das Unterschreiten eines ersten unteren Schwellwertes zeitdiskret oder zeitkontinuierlich überwacht werden kann und/oder
- wobei der Schaltkreis ein zweites Überwachungsmittel aufweist, mit welchem der am Ausgang des Gerätes erfasste Strom auf das Unterschreiten eines zweiten unteren Schwellwertes zeitdiskret oder zeitkontinuierlich überwacht werden kann.

Aus dem Dokument DE 10 2007 029 123 A1 ist es bekannt, mittels eines Systems zur Erfassung der Kennlinie einer Leuchtdiodenanordnung unter Vielem anderen eine Fehlerüberprüfung einer Leuchtdiodenanordnung durchzuführen. Dazu weist das beschriebene System ein Steuergerät auf, mit dem die Fehlerüberprüfung grundsätzlich kontinuierlich, in zeitlichen Abständen und/oder durch externe Befehle durchgeführt werden kann. Für die Fehlerüberprüfung wird ein Temperaturkoeffizient ermittelt. Ist der Temperaturkoeffizient bekannt, ist die Erkennung eines Fehlers der Leuchtdiode möglich (siehe Absatz [0057] des Dokumentes DE 10 2007 029 123 A1). Die Ermittlung dieses Temperaturkoeffizienten und dessen Bewertung ist eine aufwändige Methode um Fehler der Leuchtdiodenanordnung festzustellen. Für andere Leuchtmittel als Leuchtdiodenanordnung ist das in dem Dokument DE 10 2007 029 123 A1 beschriebene Verfahren nicht geeignet. Ein Fachmann hätte die aus dem Dokument DE 10 2007 029 123 A1 bekannte technische Lehre daher nicht bei der Weiterbildung eines Geräts mit den Merkmalen des Oberbegriffs berücksichtigt.

Mittels des Schaltkreises eines erfindungsgemäßen Geräts kann vorteilhaft eine Nachricht erzeugt werden, die über den Eingang und den Endstromkreis an die Einrichtung übermittelt wird. Dazu kann der Schaltkreis einen Modulator aufweisen, der zur Übertragung der Nachricht die am Eingang des Gerätes anliegende Spannung moduliert, zum Beispiel mit dem orthogonalen Frequenzmultiplexverfahren. Weitere mögliche Merkmale eines derartigen Gerätes ergeben sich aus der Figurenbeschreibung.

In einem anderen Fall, kann der Eingang des wenigstens einen Leuchtmittels der Notleuchte oder die Notleuchte an einen Ausgang eines zweites Gerätes, zum Beispiel eines Betriebsgerätes eines Systems zur Gebäudeautomatisierung, insbesondere eines DALI-, EIB- oder KNX-Systems, angeschlossen sein. Auch die drahtlose EnOcean-Technik oder WLAN-Technik könnte Verwendung finden.

Dieses zweite Gerät hat einen Eingang, der an einen Ausgang des Gerätes angeschlossen ist.

Diese zweiten Geräte, insbesondere DALI-Betriebsgeräte sind so eingerichtet, dass sie aufgrund einer über einen Kommunikationskanal des Systems zur Gebäudeautomatisierung, zum Beispiel einem Bus, an das zweite Gerät gerichteten Anweisung eine Rückmeldung über die Funktion des zweiten Gerätes über den Kommunikationskanal liefern können. So kann beispielweise ein DALI-Betriebsgerät aufgrund einer über einen DALI-Bus eingehenden Statusanfrage Rückmeldungen über die Funktion des DALI-Betriebsgerät und der an das DALI-Betriebsgerät angeschlossenen Notleuchte und/oder der Leuchtmittel der an das DALI-Betriebsgerät angeschlossenen Notleuchte geben.

Von dem Gerät können also zeitdiskret Anweisungen für die Durchführung eines Funktionstests der Notleuchte oder des Leuchtmittels der Notleuchte an das zweite Gerät übermittelt werden und das zweite Gerät meldet zeitdiskret Ergebnisse dieses Funktionstestes an das Gerät zurück. Das Gerät überwacht dann die Rückmeldung des zweiten Gerätes. Die Rückmeldung kann beispielsweise den konkreten Zustand der Notleuchte und/oder der Leuchtmittel der Notleuchte wiedergeben, also zum Beispiel Ergebnisse von Messungen wiederspiegeln. Es ist allerdings auch möglich, dass alternativ oder zusätzlich eine Rückmeldung erfolgt, die nur aussagt, dass das Betriebsgerät und/oder die daran angeschlossenen Notleuchten und/oder Leuchtmittel von Notleuchten ordnungsgemäß funktionieren oder nicht ordnungsgemäß funktionieren. Grundsätzlich ist es möglich, ein Gerät so einzurichten dass eine oder alle dieser Rückmeldungen von dem Gerät überwacht werden. Damit ist das Gerät in der Lage einen Ausfall oder einen Teilausfall einer Notleuchte zu erkennen. Selbst wenn das zweite Gerät auf eine Anweisung zur Durchführung eines Funktionstests bzw. einer Statusanfrage keine Rückmeldung liefert, weil es zum Beispiel defekt ist, wird das von dem Gerät durch die Überwachung erfasst und als Ausfall oder Teilausfall der Notleuchte erkannt. Das Gerät kann dann den Ausfall oder Teilausfall der über das zweite Gerät an das Gerät angeschlossenen Notleuchte und/oder Leuchtmittel der Notleuchte an die Einrichtung zur Steuerung und Energieversorgung von Leuchten und/oder Leuchtmitteln der Notbeleuchtung melden.

Zeitdiskrete Übermittlung der Anweisung bzw. Statusanfragen bedeutet insbesondere, dass die gleiche Anweisung bzw. Statusanfrage wiederholt in vorzugsweise äquidistanten zeitlichen Abständen übermittelt wird.

Grundsätzlich ist es möglich, das nach dem erfindungsgemäßen Verfahren das Gerät die unmittelbar oder über das zweite Geräte an das Gerät angeschlossenen Notleuchten bzw. Leuchtmittel der Notleuchte kurzzeitig einschaltet und eine Überwachung der Notleuchte durchführt. Nachdem das Gerät durch die Überwachung ein Überwachungsergebnis erzielt hat kann dann die Leuchte wieder ausgeschaltet werden. Vorzugsweise erfolgt das Ein- und Ausschalten in so kurzer Zeit, dass es für das menschliche Auge nicht sichtbar ist. Damit ist dann auch eine Überwachung der Notleuchten möglich, die Aufgrund des Zustandes der allgemeinen Stromversorgung oder aufgrund der Situation im Gebäude nicht eingeschaltet sein müssen oder dürfen.

Das Gerät und das zweite Gerät weisen jeweils eine Kommunikationsschnittstelle auf, die über einen Kommunikationskanal miteinander verbunden sind. Die Anweisung für die Durchführung des Funktionstests bzw. der Statusanfrage und die Rückmeldung des Ergebnisses können über diesen Kommunikationskanal erfolgen.

Ein erfindungsgemäßes Gerät für eine Notbeleuchtung und ein System zur Gebäudeautomatisierung, insbesondere ein DALI, KNX- oder EIB-System, weist
- eine erste Schnittstelle zur Verbindung mit einem Steuergerät der Gebäudeautomatisierung, insbesondere mit einem DALI-Steuergerät, über einen Bus der Gebäudeautomatisierung, insbesondere über einen DALI-Bus,
- eine zweite Schnittstelle zur Verbindung mit einem Betriebsgerät der Gebäudeautomatisierung, insbesondere mit einem DALI-Betriebsgerät, über einen Bus der Gebäudeautomatisierung, insbesondere über einen DALI-Bus, und
- eine dritte Schnittstelle zur Verbindung mit einem Endstromkreis der Notlichtbeleuchtung, wobei über den Endstromkreis Nachrichten zwischen einer Einrichtung zur Steuerung und Energieversorgung von Leuchten und/oder Leuchtmitteln der Notbeleuchtung und dem Gerät austauschbar sind,
auf.

Ferner weist das Gerät für eine Notbeleuchtung und ein System zur Gebäudeautomatisierung einen Schaltkreis auf, in welchen eine Nachricht des Bussystems zur Gebäudeautomatisierung mit Anweisungen für die Durchführung eines Funktionstests der Notleuchte oder des Leuchtmittels der Notleuchte erzeugbar ist, die über die zweite Schnittstelle an das zweite Gerät und zeitdiskret übermittelbar ist.

Außerdem können mit dem erfindungsgemäßen Gerät für eine Notbeleuchtung und ein System zur Gebäudeautomatisierung über die zweite Schnittstelle des Gerätes vom zweiten Gerät zeitdiskret Ergebnisse dieses Funktionstests empfangen werden. Diese Ergebnisse werden durch den Schaltkreis des Gerätes auf die Meldung eines Ausfalls oder eines Teilausfalls der Notleuchte oder des Leuchtmittels der Notleuchte überwacht.

Mittels des Schaltkreises des Gerätes für eine Notbeleuchtung und ein System zur Gebäudeautomatisierung kann eine Nachricht erzeugt werden, die über die dritte Schnittstelle und den Endstromkreis an die Einrichtung übermittelt werden kann.

Weitere Merkmale und Vorteile der vorliegenden Erfindung werden deutlich anhand der nachfolgenden Beschreibung eines bevorzugten Ausführungsbeispiels unter Bezugnahme auf die beiliegende Abbildung. Es zeigt:
- Fig. 1: eine schematische Darstellung eines erfindungsgemäßen Gerätes für eine Notbeleuchtung und
- Fig. 2: eine schematische Darstellung eines erfindungsgemäßen Gerätes für eine Notbeleuchtung und ein System zur Gebäudeautomatisierung.
Zunächst wird das Gerät nach Fig. 1 erläutert.

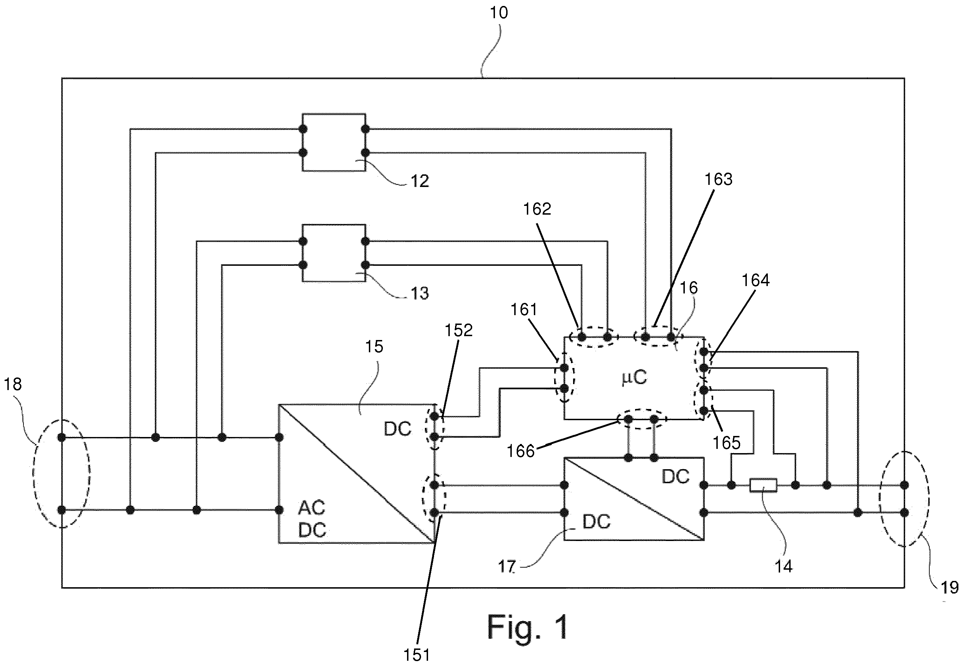

Das in der Fig. 1 dargestellte erfindungsgemäße Gerät 10 hat einen Eingang 18, der mit einem Endstromkreis einer Notbeleuchtung verbunden werden kann. An einen Ausgang 19 des Gerätes 10 können ein oder mehrere Leuchten und/oder Leuchtmittel angeschlossen werden. Das Gerät 10 kann ein integraler Bestandteil einer Leuchte sein. Es kann aber als separates Gerät 10 ausgeführt sein.

Das Gerät 10 hat einen sogenannten Leistungspfad, über den elektrische Energie vom Eingang 18 zum Ausgang 19 des Gerätes transportiert werden kann, um die an den Ausgang 19 angeschlossenen Leuchten und/oder Leuchtmittel mit elektrischer Energie zu versorgen.

In dem Leistungspfad sind, vom Eingang 18 zum Ausgang 19 betrachtet, ein DC-AC/DC-Umrichter 15 und ein DC/DC-Umrichter 17 angeordnet. Der DC-AC/DC-Umrichter bildet zum einen eine Hilfsspannungsversorgung und zum anderen einen Umrichter im Leistungspfad. Der DC-AC/DC-Umrichter 15 hat einen Eingang, der mit dem Eingang 18 des Gerätes 10 verbunden ist. Ein erster Ausgang 151 des DC-AC/DC-Umrichters 15 ist mit einem Eingang des DC/DC-Umrichters 17 verbunden. An einem zweiten Ausgang 152 des DC-AC/DC-Umrichters 15 wird eine Hilfsspannung bereitgestellt.

Ein Ausgang des DC/DC-Umrichters 17 ist mit dem Ausgang 19 des Gerätes verbunden. Der DC/DC-Umrichter 17 ist eine Schaltung mit einem steuerbaren Schalter im Sinne der Ansprüche. Im vorliegenden Beispiel bildet die Schaltung 17 eine Stromquelle.

Das Gerät weist einen Mikrocontroller 16 als Schaltkreis im Sinne der Ansprüche auf. Ein Mikrocontroller ist ein integrierter Schaltkreis. Ein Schaltkreis im Sinne der Ansprüche muss aber kein integrierter Schaltkreis sein. Er könnte auch durch diskrete Bauelemente aufgebaut sein.

Der Mikrokontroller 16 hat mehrere Eingänge 161, 162, 163, 164, 165 und einen Ausgang 166.

Der Ausgang 166 ist mit dem Stromrichter 17 verbunden. Über diese Verbindung werden Steuersignale zur Steuerung des DC/DC-Umrichters 17 an den DC/DC-Umrichter 17 gesendet.

Einer der Eingänge, nämlich der mit dem Bezugszeichen 161 bezeichnete Eingang, ist ein Versorgungseingang, der mit einem zweiten Ausgang 152 des AC/DC-Umrichters 15 verbunden ist.

Ein erster Eingang 163 des Mikrokontrollers 16 ist über ein erstes Mittel 12 zur galvanischen Trennung mit dem Eingang 18 des Gerätes 10 verbunden.

Ein zweiter Eingang 162 des Mikrokontrollers 16 ist über ein zweites Mittel 12 zur galvanischen Trennung, vorzugsweise ein Optokoppler mit dem Eingang 18 des Gerätes 10 verbunden.

Ein dritter Eingang 164 ist mit dem Ausgang 19 des Gerätes verbunden.

Ein vierter Eingang 165 des Mikrokontrollers 16 ist mit einem Messwiderstand 14 verbunden, der in die Leitungen zwischen dem Ausgang der Schaltung 17 und dem Ausgang 19 des Gerätes eingesetzt ist.

Innerhalb des Mikrocontrollers 16 ist der erste Eingang 163 des Mikrokontrollers 16 mit einem Demodulator zur Auskopplung von Informationen aus der an dem Eingang 18 anliegenden Spannung verbunden. Durch Demodulation wird aus der am Eingang 18 des Gerätes 19 anliegenden Spannung eine Information gewonnen, die zuvor an anderer Stelle, vorzugsweise in einer Einrichtung zur Steuerung und Energieversorgung von Leuchten und/oder Leuchtmitteln der Notbeleuchtung durch Modulation in die Spannung eingekoppelt wurde. Die Informationen werden in einer Steuerung, die ebenfalls in dem Mikrokontroller 16 realisiert ist, verarbeitet. Die Informationen können beispielsweise vorgeben, wie die Schaltung 17 gesteuert oder geregelt werden soll.

Der erste Eingang 163 ist innerhalb des Mikrokontrollers 16 mit einem Modulator verbunden, mit dem es möglich ist die Spannung am Eingang 18 des Gerätes zu modulieren und eine Nachricht über den Endstromkreis an die Einrichtung zu übertragen, an die der Endstromkreis angeschlossen ist. Die Einrichtung weist einen Demodulator auf, um die Nachricht aus der im Endstromkreis anliegenden Spannung zurück zu gewinnen. Damit ist eine bidirektionale Kommunikation zwischen der Einrichtung und dem Gerät über den Endstromkreis möglich. Vorzugsweise wird für die Modulation das orthogonale Frequenzmultiplexverfahren genutzt.

Der zweite Eingang 162 des Mikrokontrollers 16 ist innerhalb des Mikrokontrollers 16 mit einem Mittel zur Spannungsformerkennung verbunden, mit dem es möglich ist, eine Wechselspannung von einer Gleichspannung oder einer gleichgerichteten Wechselspannung am Eingang 18 des Gerätes 10 zu unterscheiden. Wird eine Gleichspannung oder eine gleichgerichtete Wechselspannung erkannt, wird das der Steuerung signalisiert, die daraufhin den Stromrichter 17 so ansteuert, dass an den Ausgang 19 des Gerätes angeschlossene Leuchten und/oder Leuchtmittel eingeschaltet werden oder bleiben, solange die Gleichspannung oder die gleichgerichtete Wechselspannung am Eingang 19 anliegt.

Insbesondere zur Regelung des Stroms, aber auch zur Regelung der Spannung am Ausgang 19 des Gerätes sind ein Stromsensor und ein Spannungssensor vorgesehen, die innerhalb des Mikrokontrollers 16 einerseits mit dem vierten bzw. dritten Eingang des Mikrokontrollers 16 verbunden sind und andererseits mit der Steuerung verbunden sind.

Der Mikrokontroller 16 bildet auch ein erstes Überwachungsmittel mit welchem die am Ausgang 19 des Gerätes 10 von dem Spannungssensor gemessene Spannung auf das Unterschreiten eines ersten unteren Schwellwertes überwacht werden kann. Außerdem bildet der Mikrokontroller 16 ein zweites Überwachungsmittel, mit welchem der am Ausgang 19 des Gerätes 10 vom Stromsensor erfasste Strom durch den Messwiderstand 14 auf das Unterschreiten eines zweiten unteren Schwellwertes überwacht wird.

Mit den Überwachungsmitteln ist es möglich Ausfälle oder Teilausfälle der über das Gerät mit elektrischer Energie versorgten Notleuchten festzustellen. Über den Modulator des Mikrokontrollers 16 und im weiteren über den Endstromkreis, kann dann das Unterschreiten des ersten und/oder zweiten unteren Schwellwertes durch die Spannung bzw. den Strom an die Einrichtung gemeldet werden. Diese kann mittels optischer und/oder akustischer Mittel einen Benutzer alarmieren und den Ausfall oder Totalausfall mitteilen.

Wenn, wie es gemäß einer Variante der Erfindung vorgesehen ist, von der Einrichtung jedem Gerät an einem Endstromkreis eine individuelle logische Adresse zugewiesen wird, sei es automatisch bei dem ersten Anschluss des Gerätes an den Endstromkreis sei es aufgrund einer besonderen Zuweisung im späteren Betrieb, kann die Einrichtung einem Benutzer nicht nur den Ausfall oder den Teilausfall einer Notleuchte anzeigen sondern auch welche der an einen Endstromkreis angeschlossenen Notleuchte ganz oder teilweise ausgefallen ist.

Ein Benutzer hat dann den Vorteil, dass er ohne besonderen Testbetrieb schon im laufenden Betrieb der Notbeleuchtung auf den Ausfall oder Teilausfall von Leuchten hingewiesen wird und ihm zugleich auch mitgeteilt wird, welche Notleuchte ausgefallen ist. Diese Überwachung der Notleuchten durch die erfindungsgemäßen Geräte kann vorteilhaft ständig erfolgen und nicht nur im Testbetrieb oder nur in bestimmten Phasen des Normalbetriebs.

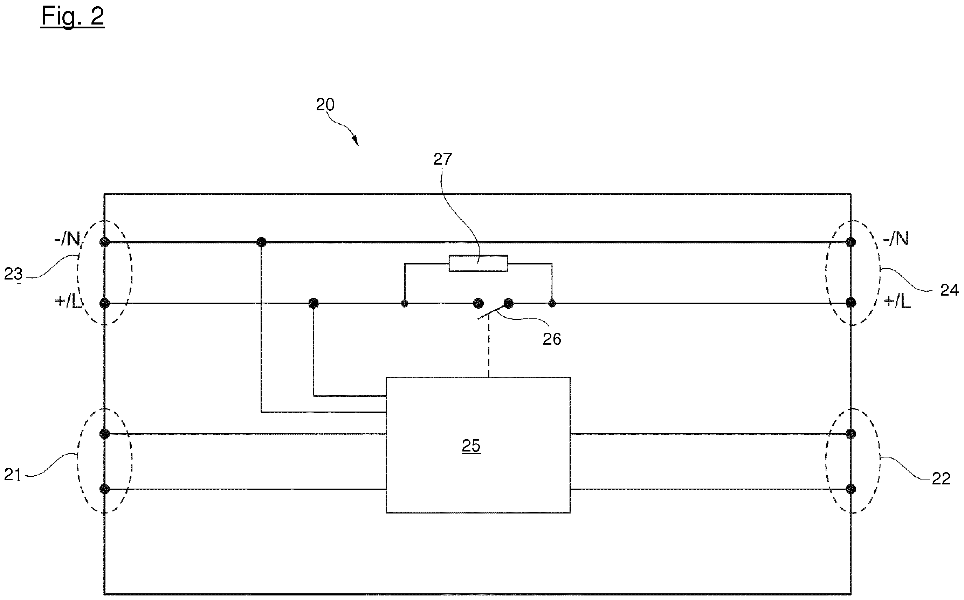

Im Weiteren wird das Gerät gemäß Fig. 2 erläutert.

Das in der Figur 2 dargestellte erfindungsgemäße Gerät 20 weist
- eine erste Schnittstelle 21 zur Verbindung mit einem DALI-Steuergerät über einen ersten DALI-Bus,
- eine zweite Schnittstelle 22 zur Verbindung mit einer oder mehrerer DALI-Leuchten über einen zweiten DALI-Bus,
- eine dritte Schnittstelle 23 zur Verbindung mit einer Einrichtung zur Steuerung und Energieversorgung von Leuchten und/oder Leuchtmitteln einer Notbeleuchtung über einen Endstromkreis und
- eine vierte Schnittstelle 24 zur Verbindung mit DALI-Leuchten auf.

Das Gerät 20 weist ferner einen Mikroprozessor 25 auf, der mit der ersten Schnittstelle 21, der zweiten Schnittstelle 22 und der dritten Schnittstelle 23 verbunden ist.

Die dritte Schnittstelle 23, die zugleich einen Eingang für eine Versorgungsspannung bildet, weißt einen Anschluss -/N für einen Neutralleiter auf, der zugleich auch einen Anschluss für ein negatives Potential der Versorgungsspannung bildet, falls das Gerät mit Gleichspannung versorgt wird. Ebenso weist die vierte Schnittstelle 24, die zugleich einen Ausgang für die Versorgungsspannung bildet, einen Anschluss -/N auf, der einerseits einen Anschluss für einen Neutralleiter und andererseits einen Anschluss für das negative Potenzial der Versorgungsspannung bildet. Diese Anschlüsse der dritten Schnittstelle 23 und der vierten Schnittstelle 24 sind miteinander und mit dem Mikroprozessor 25 verbunden.

Die dritte Schnittstelle 23 weist auch einen Anschluss +/L für einen Außenleiter bzw. für das positive Potenzial der Versorgungsspannung auf. Dieser Anschluss der dritten Schnittstelle 23 ist mit einem ersten Anschluss einer Parallelschaltung aus einem steuerbaren Schalter 26 und einem Heißleiterwiderstand 27 verbunden. Der Anschluss ist ebenso mit dem Mikroprozessor 25 verbunden.

Die vierte Schnittstelle 24 weißt auch einen Anschluss +/L für einen Außenleiter bzw. das positive Potenzial der Versorgungsspannung auf. Dieser Anschluss der vierten Schnittstelle 24 ist mit einem zweiten Anschluss der Parallelschaltung aus dem steuerbaren Schalter 26 und dem Heißleiterwiderstand verbunden.

Ein Steueranschluss des steuerbaren Schalters 26 ist mit dem Mikroprozessor 25 verbunden.

Die an den Ausgang 24 und die zweite Schnittstelle 22 angeschlossenen DALI-Leuchten werden über den Endstromkreis, an den das Gerät 20 über den Eingang 23 angeschlossen ist, mit elektrischer Energie versorgt. Über die zweite Schnittstelle 22 können DALI-Nachrichten an die DALI-Leuchten gesendet werden, die über den zweiten DALI-Bus mit der zweiten Schnittstelle 22 des Gerätes 20 verbunden sind.

DALI-Nachrichten, die über die zweite Schnittstelle 22 und den daran angeschlossenen zweiten DALI-Bus an die daran angeschlossene DALI-Leuchte gesendet werden, kann das Gerät 20 über die erste Schnittstelle 21, den daran angeschlossenen ersten DALI-Bus von dem daran angeschlossenen DALI-Steuergerät empfangen. Die von dem DALI-Steuergerät empfangenen DALI-Nachrichten werden durch den Mikrocontroller 25 des Gerätes 20 durchgeschleift. Außerdem werden die über die erste Schnittstelle 21 empfangenen DALI-Nachrichten in einem Speicher des Mikrocontrollers 25 abgelegt.

DALI-Nachrichten, die über die zweite Schnittstelle 22 und den daran angeschlossenen zweiten DALI-Bus an die daran angeschlossene DALI-Leuchte gesendet werden, kann das Gerät 20 auch in dem Mikrocontroller 25 aus über den Eingang 23 erhaltenen Nachrichten erzeugen. Dazu bildet der Mikrocontroller 25 einen Demodulator, ein Mittel zur Erkennung der Spannungsform der am Eingang 23 anliegenden Versorgungsspannung und einen Umsetzer.

Die an dem Eingang 23 anliegende Versorgungsspannung ist moduliert und zwar durch ein orthogonales Frequenzmultiplexverfahren. Durch die Modulation sind Nachrichten der Einrichtung zur Steuerung und Energieversorgung von Leuchten und/oder Leuchtmitteln einer Notbeleuchtung in der Versorgungsspannung codiert. Durch den Demodulator ist es möglich, diese Nachrichten aus dem anliegenden Spannungssignal zurückzugewinnen. Die zurück gewonnenen Nachrichten werden in dem Umsetzer in DALI-Nachrichten umgesetzt.

Zugleich ist es so, dass man an der Spannungsform der an dem Eingang 23 anliegenden Versorgungsspannung erkennen kann, ob die allgemeine Stromversorgung am Hauptverteiler (und womöglich die allgemeine Stromversorgung am Unterverteiler) ausgefallen ist. Zumindest bei einem Ausfall der allgemeinen Stromversorgung am Hauptverteiler wird von der Einrichtung zur Steuerung und Energieversorgung der Leuchten und/oder Leuchtmittel der Notbeleuchtung Gleichstrom in den Endstromkreis eingespeist, an den der Eingang 23 angeschlossen ist. Durch das Mittel zur Erkennung der Spannungsform der am Eingang 23 anliegenden Spannung kann daher der Ausfall der allgemeinen Stromversorgung am Hauptverteiler erkannt werden. Wird dieser Ausfall erkannt, wird von dem Mikrocontroller 25 eine DALI-Nachricht erzeugt, durch welche die an das Gerät 20 angeschlossenen DALI-Leuchten eingeschaltet werden.

Es gibt somit zwei Möglichkeiten wie die Einrichtung zur Steuerung und Energieversorgung der Leuchten und/oder Leuchtmittel der Notbeleuchtung Anweisungen zum Einschalten oder zum Ausschalten der an das Gerät 20 angeschlossenen DALI-Leuchten über das Gerät 20 an die DALI-Leuchten senden kann.

Kehrt die allgemeine Stromversorgung am Hauptverteiler zurück oder kehrt gegebenenfalls die allgemeine Stromversorgung an den Unterverteilern zurück, tritt der störungsfreie Betrieb wieder ein. Leuchten der Notbeleuchtung in Bereitschaftsschaltung und gegebenenfalls Leuchten mit geschaltetem Dauerlicht der Notbeleuchtung können dann ausgeschaltet werden. Dazu werden dann entsprechende Nachrichten von der Einrichtung zur Steuerung und Energieversorgung der Leuchten und/oder Leuchtmittel der Notbeleuchtung erzeugt und über das Gerät 20 in DALI-Nachrichten umgesetzt und an die DALI-Leuchten gesendet.

Nach einer solchen Rückkehr in den störungsfreien Betrieb können dann einige oder alle DALI-Leuchten in einem Zustand sein, der nicht dem Zustand entspricht, der vor dem Eintritt der Störung vorlag. Um dem Abhilfe zu schaffen, wird die letzte in dem Speicher abgelegte und über die erste Schnittstelle 21 empfangene DALI-Nachricht aus dem Speicher ausgelesen und erneut über die zweite Schnittstelle 22 an die DALI-Leuchten gesendet, die dann in dem Zustand sind, der vor dem Eintritt der Störung der allgemeinen Stromversorgung vorlag.

Der Mikrokontroller 25 ist ferner so eingerichtet, dass er eine DALI-Nachricht erzeugen kann, mit dem das an das Gerät 20 angeschlossene DALI-Betriebsgerät zur Durchführung eines Funktionstestes der Notleuchte oder des Leuchtmittels der Notleuchte angewiesen werden kann. Diese DALI-Nachricht wird über die zweite Schnittstelle 22 an das DALI-Betriebsgerät zeitdiskret übermittelt. Im vorliegenden Fall wird diese DALI-Nachricht an üblicherweise äquidistanten Zeitpunkten an das DALI-Betriebsgerät gesendet. Das DALI-Betriebsgerät führt nach dem Empfang jeder dieser DALI-Nachrichten einen Funktionstest durch und meldet das Ergebnis als DALI-Nachricht über die zweite Schnittstelle 22 an das Gerät 22 zurück. Wie der Funktionstest von dem DALI-Betriebsgerät durchgeführt wird, bleibt dem DALI-Betriebsgerät überlassen.

In dem Mikrokontroller 25 wird die DALI-Nachricht mit dem von dem DALI-Betriebsgerät gemeldeten Ergebnis ausgewertet. Dabei wird überwacht, ob das Ergebnis des Funktionstests ein Ausfall oder einen Teilausfall der DALI-Leuchte bedeutet. Wird im Zuge dieser Überwachung ein Ausfall oder Teilausfall der DALI-Leuchte festgestellt, erzeugt der Mikrokontroller eine Nachricht, welche den Ausfall bzw. Teilausfall der DALI-Leuchte unter Angabe der logischen Adresse über die dritte Schnittstelle und den Endstromkreis an die Einrichtung zur Steuerung und Energieversorgung von Leuchten und/oder Leuchtmitteln der Notbeleuchtung übermittelt.

## Patentansprüche

1. Verfahren zum Überwachen von Notleuchten einer Notbeleuchtungsanlage, wobei die Notbeleuchtung
- eine Einrichtung zur Steuerung und Energieversorgung von Leuchten und/oder Leuchtmitteln der Notbeleuchtung,
- wenigstens einen an die Einrichtung angeschlossenen Endstromkreis,
- wenigstens ein an den Endstromkreis angeschlossenes Gerät (10, 20) und
- wenigstens eine Notleuchte mit wenigstens einem Leuchtmittel aufweist, wobei die Notleuchte oder das Leuchtmittel der Notleuchte unmittelbar oder mittelbar an das Gerät (10, 20) angeschlossen ist,
**gekennzeichnet dadurch,**
**dass** zur Überwachung der Notleuchte oder des Leuchtmittels der Notleuchte mittels des Gerätes (10, 20) eine zeitkontinuierliche oder zeitdiskrete Überwachung der Funktion der Notleuchte oder des Leuchtmittels der Notleuchte durchgeführt wird und
**dass** durch das Gerät (10, 20) eine Nachricht an die Einrichtung übermittelt wird, wenn das Gerät einen Ausfall oder einen Teilausfall der Notleuchte oder des Leuchtmittels der Notleuchte erfasst.

2. Verfahren nach Anspruch 1, **dadurch gekennzeichnet, dass**
- in dem Fall, dass der Eingang des wenigstens einen Leuchtmittels einer an das Gerät (10, 20) angeschlossenen Notleuchte unmittelbar an einen Ausgang (19) des Gerätes (10) angeschlossen ist,
- das Gerät (10) zum Zwecke des Funktionstests die Spannung und/oder den Strom an diesem Ausgang (19) zeitkontinuierlich oder zeitdiskret überwacht.

3. Verfahren nach Anspruch 2, **dadurch gekennzeichnet, dass** das Gerät (10) zumindest ein erstes Überwachungsmittel zur Überwachung der Spannung am Ausgang (19) des Gerätes (10) und/oder zumindest ein zweites Überwachungsmittel zur Überwachung eines Stromes durch den Ausgang (19) des Gerätes (10) aufweist.

4. Verfahren nach Anspruch 3, **dadurch gekennzeichnet, dass** die Überwachungsmittel einen Ausfall oder einen Teilausfall des Leuchtmittels erkennen, wenn
- die am Ausgang (19) des Gerätes (10) anliegende Spannung einen ersten unteren Schwellwert unterschreitet oder einen ersten oberen Schwellwert überschreitet und/oder
- der durch den Ausgang (19) des Gerätes (10) fließende Strom einen zweiten unteren Schwellwert unterschreitet oder einen zweiten oberen Schwellwert überschreitet.

5. Verfahren nach Anspruch 1, **dadurch gekennzeichnet, dass**
- in dem Fall, dass der Eingang des wenigstens einen Leuchtmittels der Notleuchte oder der Notleuchte an einen Ausgang eines zweites Gerätes, zum Beispiel eines Betriebsgerätes eines System zur Gebäudeautomatisierung, insbesondere eines DALI-, EIB- oder KNX-Systems, angeschlossen ist, das einen Eingang hat, der an einen Ausgang (24) des Gerätes (20) angeschlossen ist,
- von dem Gerät (20) wenigstens eine Anweisung für die Durchführung eines Funktionstests der Notleuchte oder des Leuchtmittels der Notleuchte oder einer Statusanfrage erzeugt und zeitdiskret an das zweite Gerät übermittelt wird und das zweite Gerät zeitdiskret Ergebnisse dieser Funktionstests oder den Status an das Gerät zurückmeldet und das Gerät (20) die Rückmeldung des zweiten Gerätes überwacht.

6. Verfahren nach Anspruch 5, **dadurch gekennzeichnet, dass** das Gerät (20) und das zweite Gerät jeweils eine Kommunikationsschnittstelle (22) aufweisen, die über einen Kommunikationskanal miteinander verbunden sind, und dass die Anweisung für die Durchführung des Funktionstests und die Rückmeldung des Ergebnisses oder des Status über diesen Kommunikationskanal erfolgen.

7. Verfahren nach einem der Ansprüche 1 bis 6, **dadurch gekennzeichnet, dass** das Gerät (20) eine Nachricht erzeugt, die einen Ausfall oder einen Teilausfall der Notleuchte oder des Leuchtmittels der Notleuchte anzeigt und vom Gerät (20) über den Endstromkreis an die Einrichtung übermittelt wird.

8. Verfahren nach Anspruch 7, **dadurch gekennzeichnet, dass** die Nachricht durch Modulation der im Endstromkreis anliegenden Spannung nach dem orthogonalen Frequenzmultiplexverfahren übertragen wird.

9. Gerät (10) für eine Notleuchte einer Notbeleuchtung
- mit einem Eingang (18) zur Verbindung mit einem Endstromkreis einer Notbeleuchtung und einem Ausgang (19) zur Verbindung mit einer Notleuchte oder einem Leuchtmittel der Notleuchte, wobei über den Endstromkreis
- Nachrichten zwischen einer Einrichtung zur Steuerung und Energieversorgung von Leuchten und/oder Leuchtmitteln der Notbeleuchtung und dem Gerät (10) austauschbar sind und
- das Gerät (10) und die an das Gerät (10) angeschlossene Notleuchte oder das an das Gerät (10) angeschlossene Leuchtmittel der Notleuchte mit elektrischer Energie versorgbar ist,
- wobei das Gerät (10) wenigstens eine Schaltung (17) mit wenigstens einem steuerbaren Schalter aufweist, die mit dem Eingang und dem Ausgang verbunden ist und mittels der eine am Ausgang des Gerätes (10) anlegbare Spannung oder ein durch den Ausgang des Gerätes (10) fließender Strom zur Versorgung der an das Gerät (10) angeschlossenen Notleuchte oder des an das Gerät (10) angeschlossenen Leuchtmittels der Notleuchte mit elektrischer Energie einschaltbar und/oder einstellbar ist,
- wobei das Gerät (10) einen Schaltkreis (16) zur Steuerung der Schaltung (17) mit dem wenigstens einen steuerbaren Schalter aufweist, der einen Ausgang hat (166), der mit einem Eingang der wenigstens einen Schaltung (17) zum Einschalten und/oder Einstellen verbunden ist,
- wobei der Schaltkreis (16) einen Stromsensor zum Erfassen des Stroms durch den Ausgang (19) des Gerätes (10) aufweist ist, und/oder der Schaltkreis (16) einen Spannungssensor zum Erfassen der Spannung am Ausgang (19) des Gerätes (10) aufweist.
**dadurch gekennzeichnet,**
- **dass** der Schaltkreis (16) ein erstes Überwachungsmittel aufweist, mit welchem die am Ausgang (19) des Gerätes (10) erfasste Spannung auf das Unterschreiten eines ersten unteren Schwellwertes zeitdiskret oder zeitkontinuierlich überwachbar ist und/oder
- **dass** der Schaltkreis (16) ein zweites Überwachungsmittel aufweist, mit welchem der am Ausgang (19) des Gerätes (10) erfasste Strom auf das Unterschreiten eines zweiten unteren Schwellwertes zeitdiskret oder zeitkontinuierlich überwachbar ist.

10. Gerät (10) nach Anspruch 9, **dadurch gekennzeichnet, dass** mittels des Schaltkreises (16) eine Nachricht erzeugbar ist, die über den Eingang (18) und den Endstromkreis an die Einrichtung übermittelbar ist.

11. Gerät (20) für eine Notbeleuchtung und ein System zur Gebäudeautomatisierung, insbesondere ein DALI, KNX- oder EIB-System, mit
- einer ersten Schnittstelle (21) zur Verbindung mit einem Steuergerät der Gebäudeautomatisierung, insbesondere mit einem DALI-Steuergerät, über einen Bus der Gebäudeautomatisierung, insbesondere über einen DALI-Bus,
- einer zweiten Schnittstelle (22) zur Verbindung mit einem Betriebsgerät der Gebäudeautomatisierung, insbesondere mit einem DALI-Betriebsgerät, über einen Bus der Gebäudeautomatisierung, insbesondere über einen DALI-Bus, und
- einer dritten Schnittstelle (23) zur Verbindung mit einem Endstromkreis der Notlichtbeleuchtung, wobei über den Endstromkreis Nachrichten zwischen einer Einrichtung zur Steuerung und Energieversorgung von Leuchten und/oder Leuchtmitteln der Notbeleuchtung und dem Gerät (20) austauschbar sind,
**dadurch gekennzeichnet,**
**dass** das Gerät (20) einen Schaltkreis (25) aufweist, in welchem wenigstens eine Nachricht des Bussystems zur Gebäudeautomatisierung mit Anweisungen für die Durchführung eines Funktionstests der Notleuchte oder des Leuchtmittels der Notleuchte oder eine Statusanfrage erzeugbar ist, die über die zweite Schnittstelle (22) an das zweite Gerät zeitdiskret übermittelbar ist, und
**dass** über die zweite Schnittstelle (22) des Gerätes (20) vom zweiten Gerät zeitdiskret Ergebnisse dieses Funktionstests oder der Status empfangbar sind, und
**dass** diese Ergebnisse oder der Status durch den Schaltkreis (25) des Gerätes (29) auf die Meldung eines Ausfalls oder eines Teilausfalls der Notleuchte oder des Leuchtmittels der Notleuchte überwachbar sind.

12. Gerät (20) nach Anspruch 11, **dadurch gekennzeichnet, dass** mittels des Schaltkreises (25) eine Nachricht erzeugbar ist, die über die dritte Schnittstelle (23) und den Endstromkreis an die Einrichtung übermittelbar ist.
